# EUROPÄISCHE PATENTSCHRIFT

(11) **EP 2 391 868 B1**
(45) Veröffentlichungstag und Bekanntmachung des Hinweises auf die Patenterteilung: **31.12.2014**
(21) Anmeldenummer: 10711356.5
(22) Anmeldetag: 28.01.2010
(51) Int. Cl.: G01D 5/20

(54) **POSITIONSSENSOR**
POSITION SENSOR
CAPTEUR DE POSITION

(30) Priorität: 28.01.2009 DE 102009006529
(43) Veröffentlichungstag der Anmeldung: 07.12.2011
(73) Patentinhaber: Continental Automotive GmbH, 30165 Hannover (DE)
(72) Erfinder: BENDER, Guenther, 61191 Rosbach (DE); KÖHLER, Stefan, 60437 Frankfurt (DE); WALLRAFEN, Werner, 65719 Hofheim (DE)
(86) Internationale Anmeldenummer: PCT/EP2010/050983
(87) Internationale Veröffentlichungsnummer: WO 2010/086360

(56) Entgegenhaltungen:
- DE-A1-102006 046 984
- US-A1- 2004 129 095

## Beschreibung

Gegenstand der vorliegenden Erfindung ist ein Positionssensor, vorzugsweise ein Winkelsensor zur Erfassung des Drehwinkels einer Welle, bestehend aus einem Leadframe auf dem die elektronischen Bauteile des Positionssensors angeordnet und mit diesem elektrisch verbunden sind, einer Umspritzung aus einem Kunststoff, wobei die Umspritzung zumindest die elektronischen Bauteile umschließt und so mit dem Leadframe ein Sensormodul bildet, mehreren elektrischen Anschlüssen des Sensormoduls, welche durch das Leadframe gebildet sind und einem Trägermodul, welches das Sensormodul aufnimmt, wobei das Trägermodul elektrische Anschlüsse besitzt, die mit den elektrischen Anschlüssen des Sensormoduls elektrisch leitend verbunden sind.

Derartige Positionssensoren stehen in Verbindung mit einem Aktuator, wobei der Positionssensor einen dem Aktuator zugeordneten Magneten und elektronische Bauteile umfasst und mit elektrischen Steckanschlüssen, z. B. einem so genannten Kundenstecker, ausgerüstet ist. Die Positionssensoren finden bei Verbrennungskraftmaschinen Anwendung, wo sie die Drehstellung von Aktuatoren für die Steuerung des Verbrennungsmotors erfassen, beispielsweise bei der Laststeuerung, Abgasrückführung, Luftklappen im Ansaugtrakt oder der Verstellung der Schaufeln eines Turboladers. Das Trägermodul ist oftmals als Gehäusedeckel ausgebildet, so dass der Winkelsensor selbst in einer Baueinheit geschützt verschlossen wird, wobei die elektrischen Steckanschlüsse als Kundenstecker ausgebildet sind, der nach Kundenwünschen konfiguriert ist und den elektrischen Anschluss an die Motorelektronik ermöglicht.

Der eigentliche Winkelsensor besteht dabei beispielsweise aus einem Leadframe auf dem die elektronischen Bauteile angeordnet sind. Unter elektronischen Bauteilen werden Halbleiterchips, Sensorelemente und Entstörbauteile verstanden. Dies sind insbesondere wenigstens ein magnetoresistiven Messaufnehmer oder einem Hallsensor, z. B. in Halbleitertechnik, wobei dem Messaufnehmer auch bereits jeweils ein Chip mit der Auswerteelektronik zugeordnet ist. Weiter sind das Kondensatoren, um die elektromagnetische Verträglichkeit zu verbessern. Vorteilhaft ist die redundante Ausbildung mit zwei Messaufnehmern und zwei zugeordneten Auswertelektroniken, um die Sicherheit beispielsweise beim Erfassen der Drehwinkelstellung einer Drosselklappe zu erhöhen.

Hierzu ist bekannt, die elektronischen Bauteile des Winkelsensors unmittelbar mit einem Leadframe elektrisch zu verbinden, das Leadframe ohne das Trägermodul mit den elektronischen Bauelementen mit einem Duroplasten zur Bildung eines Winkelsensormoduls zu umspritzen und das Winkelsensormodul anschließend in eine Aufnahme des Trägermoduls einzulegen, zu befestigen und mit den elektrischen Anschlüssen zu verbinden (DE 10 2006 046 984 A1). Die Befestigung des Winkelsensormoduls am Trägermodul muss dabei so erfolgen, dass die Befestigung einerseits langzeitstabil und andererseits form- und lagestabil erfolgt. So gewährleistet beispielsweise ein Verschrauben eine sehr sichere Befestigung. Allerdings ist ein derartiges Befestigen mit hohen Kosten verbunden. Es sind zwar auch einfachere und kostengünstigere Befestigungsverfahren bekannt, diese sind jedoch oftmals ungeeignet, um unter den speziellen Einsatzbedingungen eines Winkelsensors bei einer Verbrennungsmaschine eine zuverlässige und vibrationsfeste Befestigung und Positionierung zu gewährleisten. So stellt schon allein der Temperaturbereich von -40°C bis 160°C erhebliche Anforderungen an die Positionierung und Befestigung.

Der vorliegenden Erfindung liegt die Aufgabe zugrunde, einen Positionssensor zu schaffen ist, der möglichst einfach aufgebaut ist und auch unter schwierigen Einsatzbedingungen, wie dem Einsatz an einer Verbrennungskraftmaschine, langzeitstabil lagegenau anordnen lässt.

Gelöst wird die Aufgabe dadurch, dass das Trägermodul mindestens zwei Dome besitzt, zwischen denen das Sensormodul angeordnet ist, und dass das jeweils freie Ende der Dome derart verformt ist, dass das Sensormodul in seiner Position geklemmt ist.

Der Vorteil der Erfindung besteht darin, dass mit dem Klemmen des Sensormoduls am Trägermodul mittels mindestens zweier Dome eine besonders einfach herzustellende Befestigung des Sensormoduls gefunden wurde. Diese Art der Befestigung ermöglicht eine automatisierte Montage des Positionssensors. Überraschenderweise hat sich die Befestigung trotz möglicher Bedenken hinsichtlich Relaxion und eines damit verbunden im Laufe der Lebensdauer auftretenden Spiels als langzeitstabil herausgestellt.

Eine verbesserte Zuordnung des Sensormoduls zum Trägermodul wird gemäß einer anderen vorteilhaften Ausgestaltung dadurch erreicht, dass das Trägermodul mindestens ein Positionierungselement besitzt. Das mindestens eine Positionierelement hat die Aufgabe, die Position des Sensormoduls festzulegen. Das Vorsehen von Positionierungselementen ermöglicht, die Dome nunmehr ausschließlich für die Befestigung zu nutzen. Positionsveränderungen des Sensormoduls gegenüber dem Trägermodul infolge der eingetragenen Energie zur Aufwärmen der Dome und den beim Verformen aufgebrachten Kräfte werden somit vermieden. Die dadurch sinkenden Anforderungen hinsichtlich Lage und Genauigkeit der Dome erlauben eine kostengünstigere Fertigung des Trägerteils.

Das mindestens eine Positionierungselement lässt sich in einfacher Weise herstellen, wenn es einstückig mit dem Trägermodul verbunden ist.

Die Positionierung des Sensormoduls ist besonders einfach, wenn die Positionierungselemente derart am Trägermodul angeordnet sind, dass das Sensormodul mit seinem Rand an den Positionierungselementen anliegt.

In einer anderen vorteilhaften Ausgestaltung sind die Positionierungselemente derart auf dem Trägermodul angeordnet sind, dass sie das Sensormodul bezüglich der Verschiebung entlang mindestens einer Achse festlegen.

Eine besonders exakte Positionierung des Sensormoduls wird mit einer Anordnung der Positionierungselemente auf dem Trägermodul erreicht, welche das Sensormodul hinsichtlich der Verschiebbarkeit entlang zweier rechtwinklig zueinander angeordneter Achsen festlegt.

Eine besonders stabile Befestigung des Sensormoduls am Trägermodul wird dadurch erreicht, dass die Umspritzung des Leadframes einen als Flansch ausgebildeten Rand besitzt, der von den verformten Domen umgriffen wird. Aufgrund der geringen Höhe des Flansches können die Dome kleiner ausgebildet werden. Des Weiteren besitzt der Flansch eine ausreichend große Fläche für die Befestigung.

Gemäß einer anderen vorteilhaften Ausgestaltung umgreifen die verformten Dome das Leadframe in seinen nicht umspritzten Bereichen. Hierzu weist das Leadframe Ausnehmungen auf, in die die Dome beim Einsetzen des Sensormoduls in das Trägerteil eingreifen.

Das Verformen des jeweils freien Endes der mindestens zwei Dome lässt sich in besonders einfacher Weise durch Warmverstemmen oder durch Aufheizen mittels Licht-, Infrarot- oder Laserstrahlung mit anschließender Umformung erreichen.

Für eine einwandfreie Arbeitsweise des Positionssensors ist eine exakte Lage mit ausschlaggebend. Eine definierte Position des Sensormoduls auf dem Trägermodul wird dadurch erreicht, dass das Trägermodul mindestens zwei Auflageelemente besitzt und auf jedem Auflageelement mindestens ein Dom angeordnet ist, dass jedes Auflageelement eine Auflagefläche besitzt, welche eine erhöhte Position gegenüber dem Trägermodul aufweist, so dass das Sensormodul bei Auflage auf den Auflageflächen einen Abstand zum Trägermodul besitzt. Durch die Aufnahmeflächen wird eine definierte Auflage geschaffen, die nur in geringer Weise von Toleranzen beeinflusst sind.

Die Dome lassen sich besonders einfach dadurch erzeugen, indem sie einstückig mit den Auflageelementen ausgebildet sind. In gleicher vorteilhafter Weise sind auch die Auflageelemente einstückig mit dem Trägermodul ausgebildet.

Infolge der Auflageelemente entsteht zwischen Sensormodul und Trägermodul ein Spalt. In einer weiteren Ausgestaltung ist in diesem Spalt eine elastische Schicht zur Dämpfung von Schwingungen und Vibrationen angeordnet. Derartige Schwingungen und Vibrationen treten beim Einsatz des Positionssensors am Motor auf und können Werte bis zu 40g annehmen. Durch die elastische Schicht lassen sich die auf die Befestigung wirkenden Belastungen erheblich reduzieren. Die elastische Schicht kann eine Dämpfungsmatte oder eine Folie aus einem Elastomer, ein Gel oder eine pastöse Schicht sein.

Neben dem Flansch der Umspritzung können die Dome und Positionierungselemente auch mit anderen umspritzten Bereichen und/oder nicht umspritzten Bereichen des Leadframes in Kontakt treten. Insbesondere wenn die Dome mit den nicht umspritzten Bereichen des Leadframes in Kontakt treten, können die Dome kürzer ausgebildet werden, da die nicht umspritzten Bereiche des Leadframes eine geringer Dicke aufweisen als mit Umspritzung. Das hat den Vorteil, dass aufgrund der kürzeren Länge der Dome, deren mögliche Relaxion wesentlich geringer sein wird. Ebenso werden thermische Ausdehnungen während des Betriebs geringer ausfallen. Die Dome und Positionierungselemente sind hierbei in Ausnehmungen in den nicht umspritzten Bereichen des Leadframes angeordnet. Diese Ausnehmungen sind in vorteilhaften Ausgestaltungen als Bohrungen, Langloch ausgebildet, welche Dome und Positionierungselemente vollständig umschließen, oder als einseitig offene Ausnehmungen, welche die Dome nur teilweise umgeben, ausgebildet.

Die Anzahl der Ausnehmungen lässt sich reduzieren, wenn in einer Ausnehmung Dome und Positionselemente angeordnet sind.

Um eine gute und leicht herzustellende Kontaktierung des Sensormoduls mit dem Trägermodul zu erreichen, weist das Trägermodul als auch das Sensormodul Kontaktanschlüsse auf, welche sich im Wesentlichen senkrecht zur Grundplatte des Trägermoduls und zum Sensormodul erstrecken. Diese Ausbildung erlaubt eine besonders gute Erreichbarkeit der Kontaktanschlüsse zum Herstellen der elektrischen Verbindungen. Insbesondere die Kontaktanschlüsse des Trägermoduls sind vorzugsweise in einem Winkel von 50° bis 130° zu der Grundplatte angeordnet.

Die Kontaktanschlüsse des Sensormoduls sind gemäß einer vorteilhaften Ausgestaltung mittels einer Entlastungsgeometrie, insbesondere einem Radius oder mehreren Abwinklungen, gegenüber dem Leadframe des Sensormoduls gebogen. Die Entlastungsgeometrie ist durch besonders große Radien oder mehrere Abwinklungen gekennzeichnet, um auf diese Weise die Kontaktanschlüsse mit einer größeren als der technisch notwendigen Länge auszuführen. Durch die größere Länge der Kontaktanschlüsse lassen sich die Belastungen der elektrischen Verbindungen zwischen den Kontaktanschlüssen des Trägemoduls und des Sensormoduls vermindern. Die Belastungen treten in Form von Kräften und Spannungen auf und können während der Montage durch Toleranzen und/oder während des Betriebs durch Temperaturänderungen entstehen.

Nachfolgend wird anhand der beigefügten Zeichnungen näher auf Ausführungsbeispiele der Erfindung eingegangen. Es zeigen:
- Fig. 1:: das Trägermodul mit dem Sensormodul eines Positionssensors in einer perspektivischen Darstellung;
- Fig. 2a, b:: den Positionssensor aus Fig.1 vor und nach der Montage;
- Fig. 3a, b:: eine zweite Ausführungsform des Positionssensors nach Fig. 1;
- Fig. 4a, b:: eine dritte Ausführungsform des Positionssensors nach Figur 1.

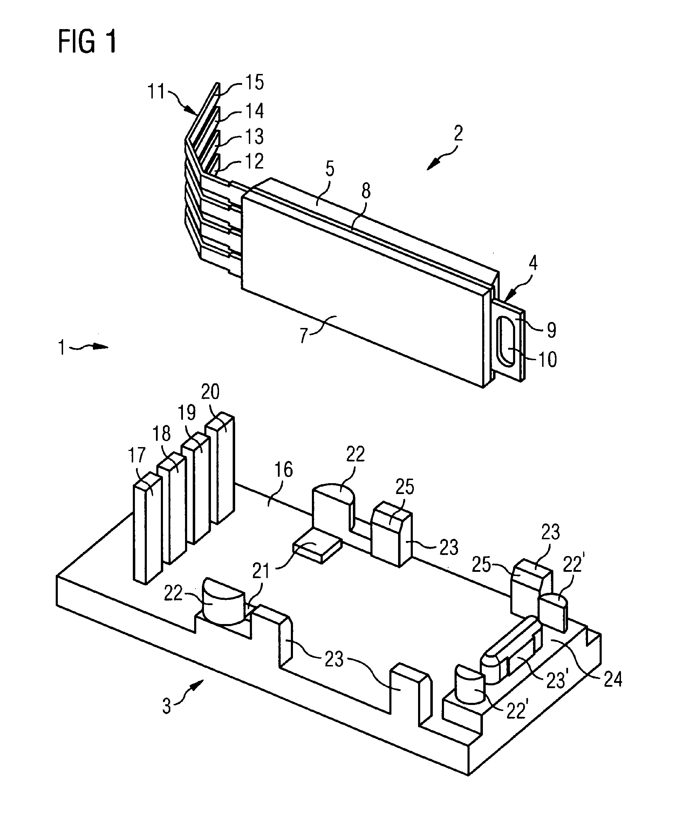

In Fig. 1 ist ein Positionssensor in Form eines Winkelsensors 1 dargestellt. Der Winkelsensor 1 besteht aus einem Sensormodul 2 und einem Trägermodul 3. Das Sensormodul 2 umfasst ein Leadframe 4, auf dem die elektronischen Bauteile für den Sensor angeordnet sind. Das Leadframe 4 besitzt im Bereich der elektronischen Bauteile eine Umspritzung 5 aus Kunststoff zu deren Schutz. Der Kunststoff für die Umspritzung 5 ist ein Kunststoff aus der Gruppe der Duroplaste. Die Umspritzung 5 ist derart gestaltet, dass sie eine Oberseite 6 und eine Unterseite 7 sowie einen zwischen Oberseite 6 und Unterseite 7 umlaufenden als Flansch 8 ausgebildeten Rand besitzt. Der Flansch 8 verläuft ungefähr in Höhe des umspritzten Leadframes 4.

Das Leadframe 4 weist an einem ersten Ende 9 eine Ausnehmung 10 in Form eines Langlochs auf. An seinem zweiten Ende 11 besitzt das Leadframe 4 elektrische Kontaktanschlüsse 12-15.

Das Trägermodul 3 besteht aus einer Grundplatte 16, in der elektrische Kontaktanschlüsse 17-20 angeordnet sind. Die Kontaktanschlüsse 17-20 durchdringen die Grundplatte 16, so dass die Kontaktanschlüsse 17-20 im Bereich der Unterseite der Grundplatte 16 mit elektrischen Leitungen für den Winkelsensor 1 verbunden werden kann (nicht dargestellt). Die elektrischen Kontaktanschlüsse 17-20 können aber auch Bestandteil eines Leadframes im Trägermodul 3 sein. Die elektrischen Kontaktanschlüsse 17-20, beziehungsweise das Leadframe bilden eine nach Kundenwünschen ausgebildete Steckverbindung, an die beispielsweise ein Stecker zur Verbindung mit dem Steuergerät eines Motors angeschlossen werden kann.

Auf der Oberseite der Grundplatte 16 sind zwei Auflageelemente 21 angeordnet, welche zum Rand der Grundplatte 16 von zwei Domen 22 begrenzt werden. Neben den beiden Domen 22 sind vier Positionierungselemente 23 vorgesehen. An der den elektrischen Kontaktanschlüsse 17-20 gegenüberliegenden Seite der Grundplatte 16 ist ein Aufnahmeelement 24 vorgesehen. Das Auflageelement 24 trägt auf seiner Oberseite zwei Dome 22'. Zwischen den beiden Domen 22' ist ein weiteres Positionierungselement 23' angeordnet.

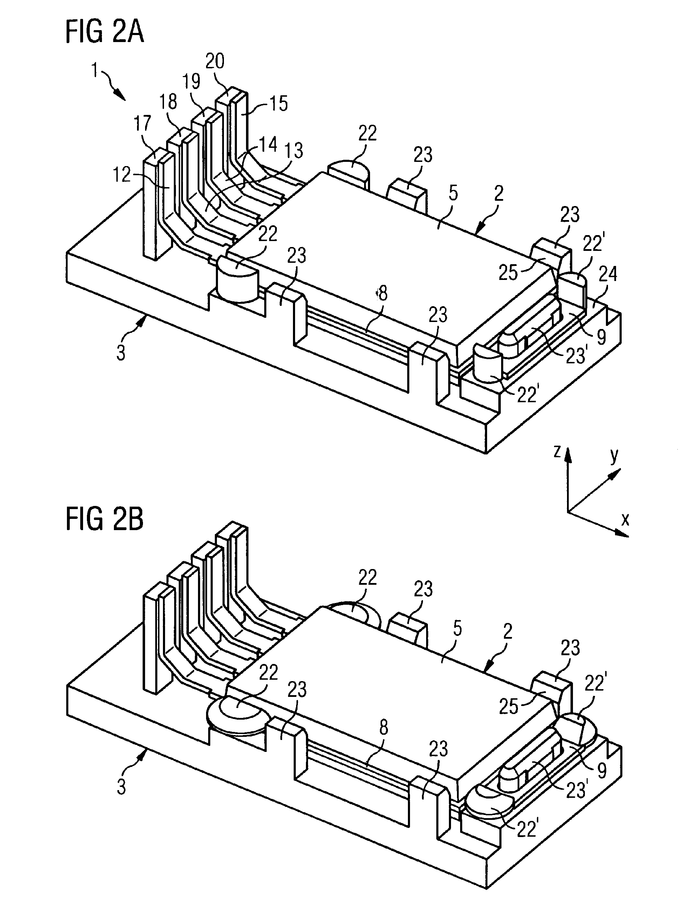

Die Figuren 2a, 2b zeigen den Winkelsensor 1 vor und nach dem Verbinden des Sensormoduls 2 mit der Trägermodul 3. Hierfür wird das Sensormodul 2 auf das Trägermodul 3 aufgesetzt. Einführschrägen 25 an den Positionierungselementen 23 erleichtern die Montage. Während die Auflageelemente 21 die Position des Sensormoduls 2 in negative z-Richtung begrenzen, wird die Lage des Sensormoduls 2 in y-Richtung durch die vier Positionierungselemente 23 an den Längsseiten des Trägermoduls 3 festgelegt. Die Lage des Sensormoduls 2 zum Trägermodul 3 wird in x-Richtung durch das Positionierungselement 23' an der den elektrischen Kontaktanschlüsse 17-20 abgewandten Seite festgelegt. Die elektrischen Kontaktanschlüsse 12-15 des Sensormoduls 2 sind relativ lang und mehrfach abgewinkelt ausgeführt. Infolgedessen ermöglichen sie trotz der festen elektrischen Verbindung mit den Kontaktanschlüsse 17-20 des Trägermoduls 3 eine gewisse Beweglichkeit des Sensormoduls 2, welche dem Ausgleich von Toleranzen während der Montage dient und verhindert, dass die Lage des Sensormoduls 2 überbestimmt ist. Wie in Fig. 2b gezeigt, werden nach dem Einlegen des Sensormoduls 2 in das Trägermodul 3 die freien Enden der Dome 22, 22' durch Warmverstemmen verformt. Infolgedessen legen sich die verformten, freien Enden über den Flansch 8 der Umspritzung 5 und das erste Ende 9 des Leadframes 4 im Sensormodul 2. Auf diese Weise wird das Sensormodul 2 in z-Richtung festgelegt.

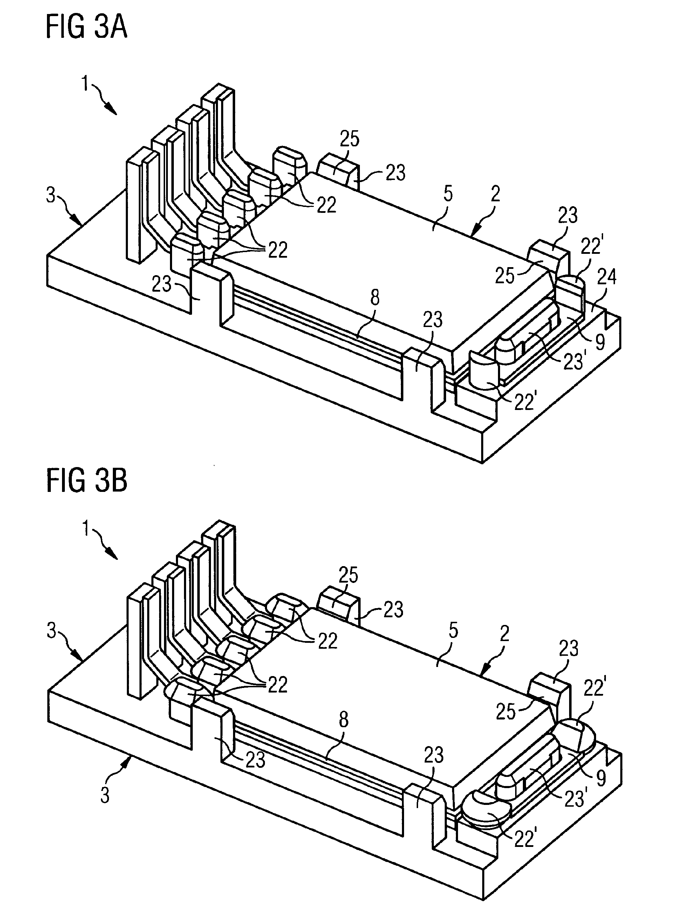

In einer anderen Ausführung gemäß den Figuren 3a, b erfolgt die Befestigung des Sensormoduls 2 über die Dome 22 nicht mehr an den beiden Längsseiten des Sensormoduls 2 sondern im Bereich der elektrischen Kontaktanschlüsse 12-15 des Leadframes 4. Hierzu sind Dome 22 derart angeordnet, dass zwischen zwei Kontaktanschlüsse 12-15 je ein Dom 22 angeordnet ist. Obwohl dies bereits eine ausreichende Befestigung darstellt, sind auch auf den Außenseiten der beiden äußeren Kontaktanschlüsse 12, 15 je ein Dom 22 angeordnet.

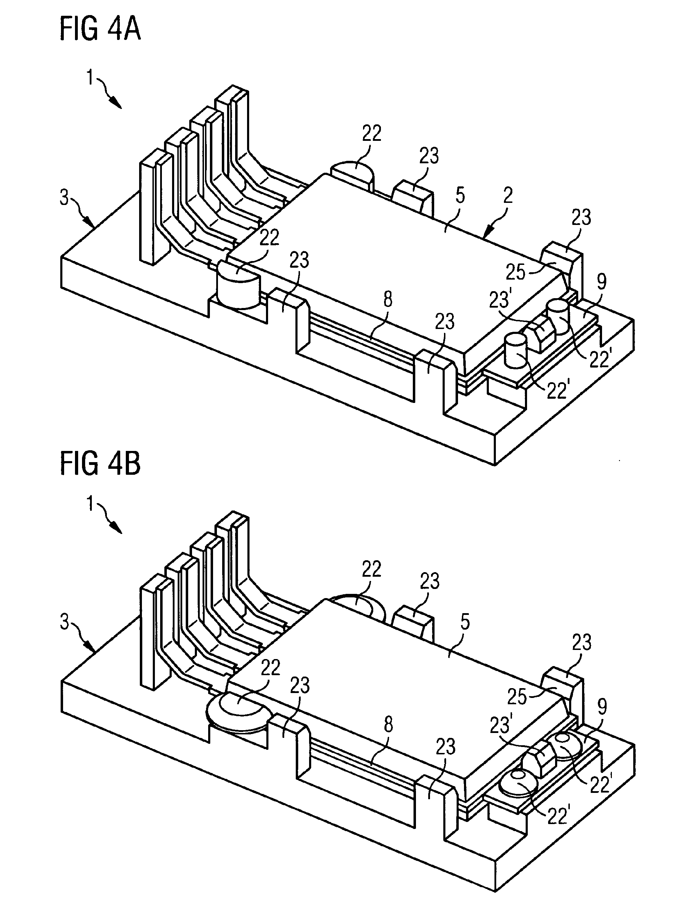

Der in den Figuren 4a, b dargestellte Winkelsensor 1 unterscheidet sich von der Darstellung in Figur 1 darin, dass das Positionierungselement 23' an der den elektrischen Kontaktanschlüsse 17-20 abgewandten Seite des Trägermoduls 3 mit geringerer Breite ausgebildet ist. Die Dome 22' sind ebenfalls mit geringem Abstand zu dem besagten Positionierungselement 23' angeordnet. Dadurch sind die Dome 22' nunmehr innerhalb des Langlochs 10 des Leadframes 4 positioniert.

In allen Ausführungen ist es möglich, auf der Oberseite der Grundplatte 16 zwischen den Auflageelementen 21, 24 eine elastische Schicht in Form einer Elastomerfolie (nicht dargestellt) zur Dämpfung von Schwingungen anzuordnen. Eine derartige Elastomerfolie mindert die durch Schwingungen verursachten Bewegungen des Sensormoduls 2 gegenüber dem Trägermodul 3 und gleicht unterschiedliche Ausdehnungen von Kunststoffen und Metallen infolge der unterschiedlichen Wärmeausdehnungskoeffizienten aus.

## Patentansprüche

1. Positionssensor, vorzugsweise ein Winkelsensor zur Erfassung des Drehwinkels einer Welle, bestehend aus einem Leadframe auf dem die elektronischen Bauteile des Positionssensors angeordnet und mit diesem elektrisch verbunden sind, einer Umspritzung aus einem Kunststoff, wobei die Umspritzung zumindest die elektronischen Bauteile umschließt und so mit dem Leadframe ein Sensormodul bildet, mehreren elektrischen Anschlüssen des Sensormoduls, welche durch das Leadframe gebildet sind und einem Trägermodul, welches das Sensormodul aufnimmt, wobei das Trägermodul elektrische Anschlüsse besitzt, die mit den elektrischen Anschlüssen des Sensormoduls elektrisch leitend verbunden sind, **dadurch gekennzeichnet, dass** das Trägermodul (3) mindestens zwei Dome (22, 22') besitzt, zwischen denen das Sensormodul (2) angeordnet ist, und dass das jeweils freie Ende der Dome (22, 22') derart verformt ist, dass das Sensormodul (2) in seiner Position geklemmt ist.

2. Positionssensor nach Anspruch 1, **dadurch gekennzeichnet, dass** das Trägermodul (3) mindestens ein Positionierungselement (23, 23') zur Führung des Sensormoduls (2) besitzt.

3. Positionssensor nach Anspruch 2, **dadurch gekennzeichnet, dass** das mindestens eine Positionierungselement (23, 23') einstückig mit dem Trägermodul (3) verbunden ist.

4. Positionssensor nach Anspruch 2, **dadurch gekennzeichnet, dass** die Positionierungselemente (23, 23') derart am Trägermodul (3) angeordnet sind, dass das Sensormodul (2) mit seinem Rand (8) an den Positionierungselementen (23, 23') anliegt.

5. Positionssensor nach Anspruch 2, **dadurch gekennzeichnet, dass** die Positionierungselemente (23, 23') derart am Trägermodul (3) angeordnet sind, dass das Sensormodul (2) mit nicht umspritzten Bereichen seines Leadframes (4) an den Positionierungselementen (23, 23') anliegt.

6. Positionssensor nach Anspruch 2, **dadurch gekennzeichnet, dass** die Positionierungselemente (23, 23') derart auf dem Trägermodul (3) angeordnet sind, dass sie das Sensormodul (2) bezüglich der Verschiebung entlang mindestens einer Achse festlegen.

7. Positionssensor nach Anspruch 2, **dadurch gekennzeichnet, dass** die Positionierungselemente (23, 23') derart auf dem Trägermodul (3) angeordnet sind, dass sie das Sensormodul (2) hinsichtlich der Verschiebbarkeit entlang zweier rechtwinklig zueinander angeordneter Achsen festlegen.

8. Positionssensor nach Anspruch 1, **dadurch gekennzeichnet, dass** die Umspritzung (5) einen als Flansch ausgebildeten Rand (8) besitzt, den die verformten Dome (22, 22') umgreifen.

9. Positionssensor nach Anspruch 1, **dadurch gekennzeichnet, dass** die verformten Dome (22, 22') das Leadframe (4) in umspritzten und/oder nicht umspritzten Bereichen umgreifen.

10. Positionssensor nach Anspruch 9, **dadurch gekennzeichnet, dass** beim Einsetzen des Sensormoduls (2) in das Trägermodul (3) die Dome (22, 22') in Ausnehmungen (10) des Leadframes (4) eingreifen.

11. Positionssensor nach einem der vorhergehenden Ansprüche, **dadurch gekennzeichnet, dass** das jeweils freie Ende der mindestens zwei Dome (22, 22') durch Warmverstemmen oder durch Erwärmung mittels Licht-, Infrarot- oder Laserstrahlung und anschließendem Umformen verformt ist.

12. Positionssensor nach einem der vorhergehenden Ansprüche, **dadurch gekennzeichnet, dass** das Trägermodul (3) mindestens zwei Auflageelemente (21) besitzt und auf jedem Auflageelement (21) mindestens ein Dom (22, 22') angeordnet ist, dass jedes Auflageelement (21) eine Auflagefläche besitzt, welche eine erhöhte Position gegenüber der Oberfläche (16) des Trägermoduls (3) aufweist, so dass das Sensormodul (2) bei Auflage auf den Auflageflächen (21) einen Abstand zur Oberfläche (16) des Trägermoduls (3) besitzt.

13. Positionssensor nach Anspruch 12, **dadurch gekennzeichnet, dass** die Dome (22, 22') einstückig mit den Auflageelementen (21) ausgebildet sind.

14. Positionssensor nach Anspruch 12, **dadurch gekennzeichnet, dass** die Auflageelemente (21) einstückig mit dem Trägermodul (3) ausgebildet sind.

15. Positionssensor nach Anspruch 12, **dadurch gekennzeichnet, dass** zwischen dem Trägermodul (3) und dem Sensormodul (2) eine elastische Schicht, vorzugsweise eine Elastomerfolie, eine Dämpfungsmatte, ein Gel oder eine pastöse Schicht, angeordnet ist.

16. Positionssensor nach einem der vorhergehenden Ansprüche, **dadurch gekennzeichnet, dass** nicht umspritzte Bereiche des Leadframes (4) Ausnehmungen (10) für Dome (22') und/oder Positionierungselemente (23') aufweisen.

17. Positionssensor nach Anspruch 16, **dadurch gekennzeichnet, dass** die Ausnehmungen (10) als Bohrungen, Langloch oder einseitig offene Ausnehmungen ausgebildet sind.

18. Positionssensor nach Anspruch 16, **dadurch gekennzeichnet, dass** in einer Ausnehmung (10) Dome (22') und/oder Positionselemente (23') angeordnet sind.

19. Positionssensor nach einem der vorhergehenden Ansprüche, **dadurch gekennzeichnet, dass** die Kontaktanschlüsse (17-20) des Trägermoduls (3) im Wesentlichen senkrecht zur Grundplatte (16), vorzugsweise in einem Winkel von 50°-130°, angeordnet sind.

20. Positionssensor nach Anspruch 19, **dadurch gekennzeichnet, dass** jeder der Kontaktanschlüsse (12-15) des Sensormoduls (2) mittels einer Entlastungsgeometrie, insbesondere einem Radius oder mehreren Abwinklungen, gegenüber dem Leadframe (9) des Sensormoduls (2) gebogen ist.

## Claims

1. Position sensor, preferably an angle sensor for detecting the rotation angle of a shaft, comprising a leadframe on which the electronic components of the position sensor are arranged and to which said electronic components are electrically connected, an encapsulation composed of a plastic, with the encapsulation surrounding at least the electronic components and thus forming a sensor module with the leadframe, a plurality of electrical connections of the sensor module which are formed by the leadframe, and a carrier module which accommodates the sensor module, with the carrier module having electrical connections which are electrically conductively connected to the electrical connections of the sensor module, **characterized in that** the carrier module (3) has at least two domes (22, 22') between which the sensor module (2) is arranged, and **in that** the respectively free end of the domes (22, 22') is deformed in such a way that the sensor module (2) is clamped in its position.

2. Position sensor according to Claim 1, **characterized in that** the carrier module (3) has at least one positioning element (23, 23') for guiding the sensor module (2).

3. Position sensor according to Claim 2, **characterized in that** the at least one positioning element (23, 23') is integrally connected to the carrier module (3).

4. Position sensor according to Claim 2, **characterized in that** the positioning elements (23, 23') are arranged on the carrier module (3) in such a way that the sensor module (2) rests against the positioning elements (23, 23') by way of its edge (8).

5. Position sensor according to Claim 2, **characterized in that** the positioning elements (23, 23') are arranged on the carrier module (3) in such a way that the sensor module (2) rests against the positioning elements (23, 23') by way of regions of its leadframe (4) which are not encapsulated.

6. Position sensor according to Claim 2, **characterized in that** the positioning elements (23, 23') are arranged on the carrier module (3) in such a way that they secure the sensor module (2) in respect of movement along at least one axis.

7. Position sensor according to Claim 2, **characterized in that** the positioning elements (23, 23') are arranged on the carrier module (3) in such a way that they secure the sensor module (2) in respect of the ability to move along two axes which are arranged at a right angle to one another.

8. Position sensor according to Claim 1, **characterized in that** the encapsulation (5) has an edge (8) which is in the form of a flange and which is surrounded by the deformed domes (22, 22').

9. Position sensor according to Claim 1, **characterized in that** the deformed domes (22, 22') surround the leadframe (4) in encapsulated regions and/or regions which are not encapsulated.

10. Position sensor according to Claim 9, **characterized in that** the domes (22, 22') engage in recesses (10) in the leadframe (4) when the sensor module (2) is inserted into the carrier module (3).

11. Position sensor according to one of the preceding claims, **characterized in that** the respectively free end of the at least two domes (22, 22') is deformed by hot-caulking or by heating by means of light, infrared or laser irradiation and subsequent forming.

12. Position sensor according to one of the preceding claims, **characterized in that** the carrier module (3) has at least two support elements (21) and at least one dome (22, 22') is arranged on each support element (21), **in that** each support element (21) has a support area which has an elevated position relative to the surface (16) of the carrier module (3), and therefore the sensor module (2) is at a distance from the surface (16) of the carrier module (3) when it is supported on the support areas (21).

13. Position sensor according to Claim 12, **characterized in that** the domes (22, 22') are integrally formed with the support elements (21).

14. Position sensor according to Claim 12, **characterized in that** the support elements (21) are integrally formed with the carrier module (3).

15. Position sensor according to Claim 12, **characterized in that** an elastic layer, preferably an elastomeric film, a damping mat, a gel or a pasty layer, is arranged between the carrier module (3) and the sensor module (2).

16. Position sensor according to one of the preceding claims, **characterized in that** regions of the leadframe (4) which are not encapsulated have recesses (10) for domes (22') and/or positioning elements (23').

17. Position sensor according to Claim 16, **characterized in that** the recesses (10) are in the form of bores, elongate holes or recesses which are open on one side.

18. Position sensor according to Claim 16, **characterized in that** domes (22') and/or positioning elements (23') are arranged in a recess (10).

19. Position sensor according to one of the preceding claims, **characterized in that** the contact connections (17-20) of the carrier module (3) are arranged substantially perpendicular to the base plate (16), preferably at an angle of 50°-130°.

20. Position sensor according to Claim 19, **characterized in that** each of the contact connections (12-15) of the sensor module (2) is bent relative to the leadframe (9) of the sensor module (2) by means of a strain-relief geometry, in particular a radius or a plurality of angled portions.

## Revendications

1. Capteur de position, de préférence capteur d'angle pour la détection de l'angle de rotation d'un arbre, constitué d'un leadframe sur lequel les composants électroniques du capteur de position sont disposés et avec lequel ils sont reliés électriquement, d'un surmoulage en une matière plastique, le surmoulage entourant au moins les composants électroniques et formant ainsi avec le leadframe un module de capteur, de plusieurs bornes électriques du module de capteur, qui sont formées par le leadframe et d'un module de support, qui reçoit le module de capteur, le module de support ayant des bornes électriques, qui sont reliées d'une manière conductrice de l'électricité aux bornes électriques du module de capteur, **caractérisé en ce que** le module (3) de support a au moins deux dômes (22, 22'), entre lesquels le module (2) de capteur est disposé, et **en ce que** l'extrémité libre respective des dômes (22, 22') est déformée, de manière à ce que le module (2) de capteur soit serré en sa position.

2. Capteur de position suivant la revendication 1, **caractérisé en ce que** le module (3) de support a au moins un élément (23, 23') de mise en position pour le guidage du module (2) de capteur.

3. Capteur de position suivant la revendication 2, **caractérisé en ce que** le au moins un élément (23, 23') de mise en position est relié d'une pièce avec le module (3) de support.

4. Capteur de position suivant la revendication 2, **caractérisé en ce que** les éléments (23, 23') de mise en position sont disposés sur le module (3) de support, de manière à ce que le module (2) de capteur s'applique par son bord (8) aux éléments (23, 23') de mise en position.

5. Capteur de position suivant la revendication 2, **caractérisé en ce que** les éléments (23, 23') de mise en position sont disposés sur le module (3) de support, de manière à ce que le module (2) de capteur s'applique, par des parties non surmoulées de son leadframe (4), aux éléments (23, 23') de mise en position.

6. Capteur de position suivant la revendication 2, **caractérisé en ce que** les éléments (23, 23') de mise en position sont disposés sur le module (3) de support, de manière à fixer le module (2) de capteur en ce qui concerne le déplacement le long d'au moins un axe.

7. Capteur de position suivant la revendication 2, **caractérisé en ce que** les éléments (23, 23') de mise en position sont disposés sur le module (3) de support, de manière à fixer le module (2) de capteur en ce qui concerne la possibilité de se déplacer le long de deux axes à angle droit entre eux.

8. Capteur de position suivant la revendication 1, **caractérisé en ce que** le surmoulage (5) a un bord (8) constitué sous la forme d'une bride, que les dômes (22, 22') déformés enserrent.

9. Capteur de position suivant la revendication 1, **caractérisé en ce que** les dômes (22, 22') déformés enserrent le leadframe (4) dans des zones surmoulées et/ou non surmoulées.

10. Capteur de position suivant la revendication 9, **caractérisé en ce que**, lors de l'insertion du module (2) de capteur dans le module (3) de support, les dômes (22, 22') pénètrent dans des évidements (10) du leadframe (4).

11. Capteur de position suivant l'un des revendications précédentes, **caractérisé en ce que** l'extrémité libre respective des au moins deux dômes (22, 22') est déformée par matage à chaud ou par échauffement au moyen d'un rayonnement lumineux infrarouge ou laser et ensuite par déformation.

12. Capteur de position suivant l'un des revendications précédentes, **caractérisé en ce que** le module (3) de support a au moins deux éléments (21) d'appui et au moins un dôme (22, 22') est disposé sur chaque élément (21) d'appui, **en ce que** chaque élément (21) d'appui a une surface d'appui, qui a une position surélevée par rapport à la surface (16) du module (3) de support, de sorte que le module (2) de capteur est, lors de l'appui sur les surfaces (21) d'appui, à distance de la surface (16) du module (3) de support.

13. Capteur de position suivant la revendication 12, **caractérisé en ce que** les dômes (22, 22') sont constitués d'une pièce avec les éléments (21) d'appui.

14. Capteur de position suivant la revendication 12, **caractérisé en ce que** les éléments (21) d'appui sont constitués d'une pièce avec le module (3) de support.

15. Capteur de position suivant la revendication 12, **caractérisé en ce qu'**une couche élastique, de préférence une feuille en élastomère, une nappe d'amortissement, un gel ou une couche pâteuse, est disposée entre le module (3) de support et le module (2) de capteur.

16. Capteur de position suivant l'un des revendications précédentes, **caractérisé en ce que** des parties non surmoulées du leadframe (4) ont des évidements (10) pour des dômes (22') et/ou des éléments (23') de mise en position.

17. Capteur de position suivant la revendication 16, **caractérisé en ce que** les évidements (10) sont constitués sous la forme de trous, de boutonnières ou d'évidements ouverts d'un côté.

18. Capteur de position suivant la revendication 16, **caractérisé en ce que** des dômes (22') et/ou des éléments (23') de mise en position sont disposés dans un évidement (10).

19. Capteur de position suivant l'un des revendications précédentes, **caractérisé en ce que** les bornes (17 à 20) de contact du module (3) de support sont disposées sensiblement perpendiculairement à la plaque (16) de base, de préférence suivant un angle de 50° à 130°.

20. Capteur de position suivant la revendication 19, **caractérisé en ce que** chacune des bornes (12 à 15) de contact du module (2) de capteur est courbée au moyen d'une géométrie de détente, notamment au moyen d'un rayon ou de plusieurs coudes, par rapport au leadframe (9) du module (2) de capteur.
